# EUROPÄISCHE PATENTSCHRIFT

(11) **EP 0 873 482 B1**
(45) Veröffentlichungstag und Bekanntmachung des Hinweises auf die Patenterteilung: **30.08.2000**
(21) Anmeldenummer: 96946207.6
(22) Anmeldetag: 17.12.1996
(51) Int. Cl.: F16H 61/02

(54) **STEUERUNG FÜR EINE EINRICHTUNG IN EINEM KRAFTFAHRZEUG**
CONTROL FOR A DEVICE IN A MOTOR VEHICLE
COMMANDE POUR UN DISPOSITIF SITUE DANS UNE AUTOMOBILE

(30) Priorität: 11.01.1996 DE 19600820
(43) Veröffentlichungstag der Anmeldung: 28.10.1998
(73) Patentinhaber: SIEMENS AKTIENGESELLSCHAFT, 80333 München (DE)
(72) Erfinder: GRAF, Friedrich, D-93049 Regensburg (DE)
(86) Internationale Anmeldenummer: DE9602437
(87) Internationale Veröffentlichungsnummer: WO9725555

(56) Entgegenhaltungen:
- EP-A- 0 638 742
- EP-A- 0 645 559
- DE-A- 4 101 902
- DE-A- 4 337 164
- US-A- 5 031 100

## Beschreibung

Die Erfindung betrifft eine Steuerung für ein automatisches Getriebe in einem mit einem Motor versehenen Kraftfahrzeug. Ist das Getriebe als Stufengetriebe ausgebildet, so erzeugt die Steuerung Stell- oder Schaltsignale, mit denen der jeweils günstigste Gang eingelegt wird. Ist das Getriebe als stufenloses Getriebe ausgebildet, so steuert das Stellsignal das Übersetzungsverhältnis.

Moderne Getriebesteuerungen passen die Gang- oder Übersetzungswahl unter anderem an das Fahrverhalten des Fahrers und/oder an die Fahrstrecke an. Im ersten Fall wird das Verhalten des Fahrers anhand charakteristischer Eingangsgrößen der Steuerung und daraus errechneter abgeleiteter Größen (im folgenden als Derivate oder auch Parameter bezeichnet) bewertet und in eine veränderte, dem Fahrer angepaßte Übersetzungsauswahl umgesetzt (EP-A 0 638 742, DE-C 33 41 652). Das in der Steuerung in Form einer Referenz gespeicherte Wissen, mit dem z.B. der Fahrer als "ruhig", "normal", "sportlich" klassifiziert wird, ist dabei fest vorgegeben, es besteht immer eine feste Zuordnung zwischen einem Verhalten des Fahrers und einer "Fahrerklasse". So wird z.B. häufiges und schnelles Bewegen des Fahrpedals immer zu einer sportlichen Bewertung des Fahrers und zu einer Aktivierung einer entsprechenden Übersetzungswahl, d.h. zum Beispiel zu einem Hochschalten bei höheren Drehzahlen, führen.

Eine solche feste Zuordnung ist aber nicht in jedem Fall befriedigend. So kann es durchaus vorkommen, daß ein objektiv eher ruhiger Fahrer, d.h. ein Fahrer, der keine hohe Fahrleistung und Beschleunigung anfordert, trotzdem aus irgendeinem Grund häufige und schnelle Änderungen des Pedals durchführt. Dies kann dann zu einer Fehlanpassung des Steuerungssystems führen. Möglich ist auch, daß das von der Steuerung dem Fahrer zugeordnete Schaltverhalten oder Übersetzungswahl einfach nicht seiner Idealvorstellung entspricht.

Es gibt auch andere Grundfunktionen einer adaptiven Getriebesteuerung, die wegen der im allgemeinen festen Zuordnung zu einem Verhalten der Steuerung führen, die von dem Fahrer abgelehnt wird. Dies liegt nicht nur an den unterschiedlichen persönlichen Fahrerwünschen, sondern kann auch seine Ursache in unterschiedlichen Fahrgewohnheiten in verschiedenen Ländern haben. So wird in Europa generell eine aktive Schaltstrategie, die stark von handgeschalteten Getrieben beeinflußt ist, als ideal angesehen, während in den USA mehr die dort traditionelle automatische Getriebesteuerung über manuell selektierte Schaltmuster bevorzugt wird. Ein hochgradig adaptives System nach europäischen Gewohnheiten wird dort nicht allgemein akzeptiert werden.

Ein Beispiel für unterschiedliche Fahrerwünsche ist das angepaßte Schaltverhalten auf einer Bergstrecke. In technischer Hinsicht am zweckmäßigsten ist die Auswahl eines vorgegebenen Schaltmusters, das bei einem Stufengetriebe die sog. Pendelschaltungen verhindert. Dazu werden Hochschaltungen im allgemeinen zu einer höheren Fahrgeschwindigkeit verschoben. Dies kann aber jene Fahrer stören, die einen absolut festen Zusammenhalt zwischen einer Stellung des Fahrpedals, einer Fahrzeuggeschwindigkeit und der jeweiligen Übersetzung oder dem jeweiligen Gang gewohnt sind, und die somit ein dergestalt konstantes Steuerverhalten bevorzugen. Um solche Fahrer mit einer adaptiven Getriebesteuerung zufrieden zu stellen, ist es deshalb nötig, das in der Getriebesteuerung abgelegte "feste Wissen" korrigieren oder modifizieren zu können.

Aus der Druckschrift EP 0 645 559 A1, die den nächstliegenden bekanntgewordenen Stand der Technik darstellt, ist ein Steuersystem für ein automatisches Getriebe bekannt, bei dem zwischen einem Lernmodus und einem Automatikmodus umgeschaltet werden kann. In dem Automatikmodus werden die Schaltungen der Getriebegänge auf Basis des Fahrzustandes ausgelöst, während in dem Lernmodus die Gänge von dem Fahrer geschaltet werden. Mehrere Sensoren, die die Fahrzustände des Kraftfahrzeugs erfassen, liefern Eingangssignale für ein neuronales Netz. Dieses Netz erzeugt aus einer Kombination unterschiedlich gewichteter Eingangssignale ein Ausgangssignal, das der Sollübersetzung entspricht. In dem Lernmodus wird auf Basis der Eingangssignale und des vom Fahrer ausgewählten Übersetzungsverhältnisses ein Lernmuster erzeugt, mit dem das neuronale Netz ein eingegebenes Schaltmuster korrigiert.

Der Erfindung liegt die Aufgabe zugrunde, eine Steuerung der eingangs genannten Art zu schaffen, die adaptiv ausgebildet ist, die aber auch an individuelle oder regional unterschiedliche Fahrerwünsche angepaßt werden kann und bei der insbesonder die Ursache der Abweichung vom Fahrerwunsch festgestellt werden kann. Diese Aufgabe wird erfindungsgemäß durch die Steuerung nach Anspruch 1 gelöst. Zweckmäßige Weiterbildungen der Erfindung sind in den Unteransprüchen niedergelegt.

Ein Vorteil der Erfindung liegt insbesondere darin, daß sie auch für stufenlose Getriebe (CVT) sehr geeignet ist. Solche Getriebe sind für viele Autofahrer prinzipbedingt ungewohnt: deren nach technischer Zweckmäßigkeit ausgelegte Steuerung ändert die Motordrehzahl nur wenig, um den Bereich des höchsten Motorwirkungsgrades zu nutzen. Die erfindungsgemäße Steuerung gibt dem Fahrer nun eine Zugriffsmöglichkeit, um die von ihm gewünschte Übersetzungswahl zu erhalten.

Ein Ausführungsbeispiel der Erfindung wird im folgenden anhand der Zeichnung erläutert. Es zeigen:
- Figur 1: ein Blockschaltbild der erfindungsgemäßen Steuerung;
- Figur 2 bis Figur 5: verschiedene Beispiele von Bedienungseinrichtungen, mit denen der Fahrer in die Steuerung nach Figur 1 eingreifen kann, und
- Figur 6: ein Ablaufdiagramm eines in der Steuerung nach Figur 1 abgearbeiteten Programms.

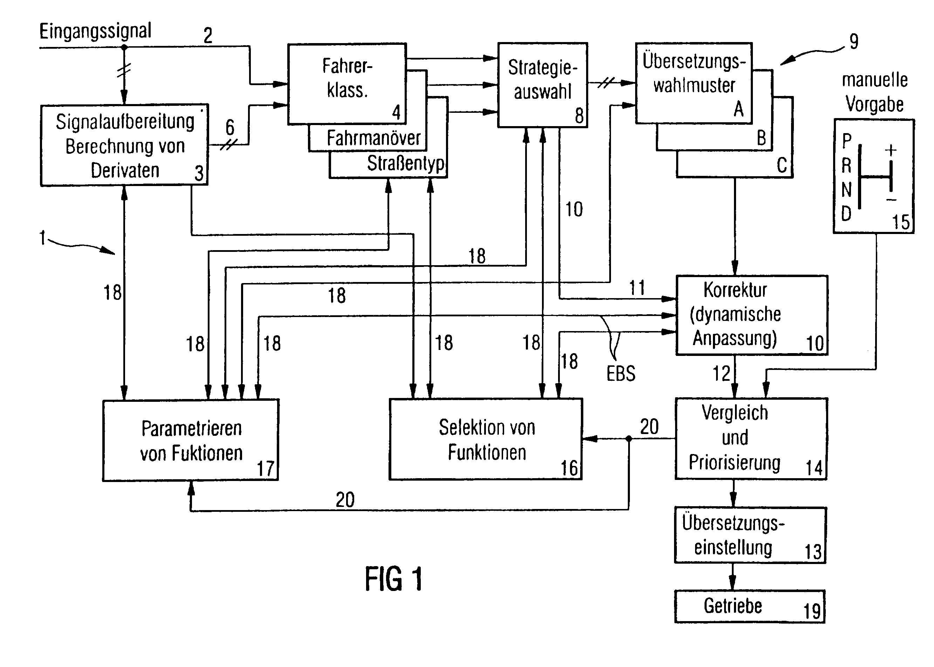

Eine Steuerung 1 (Figur 1) empfängt über eine Signalleitung 2 verschiedene Eingangssignale, die von unterschiedlichen Sensoren in einem Kraftfahrzeug und auch von anderen Steuergeräten in dem Kraftfahrzeug geliefert werden. Als Beispiele seien eine die Leistungs- oder Abtriebsdrehmomentanforderung durch den Fahrer charakterisierende Größe, zum Beispiel ein die Drosselklappenstellung wiedergebendes Signal dk, sowie ein die Abtriebsdrehzahl des Getriebes nab und damit die Fahrzeuggeschwindigkeit oder ein die Motordrehzahl charakterisierendes Signal genannt. Auch Raddrehzahl-, Querbeschleunigungs- und Längsbeschleunigungssignale können von entsprechenden Sensoren oder auch von anderen Steuergeräten, zum Beispiel einem ABS-Steuergerät empfangen werden.

Die über die Signalleitung 2 empfangenen Eingangssignale gelangen zu einer Signalaufbereitungsschaltung 3, im folgenden auch als Signalaufbereitung bezeichnet, und zu einem Klassifikationssystem 4. Einzelheiten der Eingangssignale, der Sensoren, der anderen Steuergeräte, der Signalaufbereitung und des Klassifikationssystems sind in der erwähnten Patentanmeldung EP 0 638 742 beschrieben, auf die hiermit verwiesen wird.

In der Signalaufbereitung 3 aus den Eingangssignalen berechnete abgeleitete Größen oder Derivate gelangen über eine Signalleitung 6 zu dem Klassifikationssystem 4 und werden dort ebenfalls ausgewertet. Das Klassifikationssystem 4 enthält, wie in der Zeichnung angedeutet, eine Fahrer-, eine Fahrmanöver- und eine Straßentyp-Klassifikationsschaltung. Die die jeweilige Größe kennzeichnenden Ausgangssignale des Klassifikationssystems 4 gelangen zu einer Strategieauswahlschaltung 8, im folgenden als Strategieauswahl bezeichnet, die nach einer vorgegebenen Strategie Auswahlsignale erzeugt, die an einen Speicher 9 übermittelt werden und dort eines als aus mehreren abgelegten'Übersetzungswahlmustern A, B oder C auswählen. Bei einem Stufengetriebe sind die Übersetzungswahlmuster als Schaltkennfelder ausgebildet.

Das eine Übersetzung oder einen Gang angebende Ausgangssignal des Speichers 9 gelangt zu einer Korrekturschaltung 10 und kann dort durch ein von der Strategieauswahl 8 erzeugtes und über eine Signalleitung 11 übertragenes dynamisches Korrektursignal temporär an besondere Situationen angepaßt werden. Mit diesem Korrektursignal kann die Gefahr möglicher dynamisch ungünstiger Fahrsituationen, z.B. bei Kurvenfahrten, verhindert werden.

Das Ausgangssignal der Korrekturschaltung 10 gelangt über eine Signalleitung 12 und eine noch zu beschreibende Bewertungsschaltung 14 zu einer Übersetzungseinstellungsschaltung 13, die ein Stellsignal STS erzeugt, das an ein hier nur angedeutetes automatisches Getriebe 19 übermittelt wird und dort die einzustellende Übersetzung oder, im Falle eines stufenlosen Getriebes, die Zieldrehzahl festlegt.

In der als Vergleichsschaltung ausgebildeten Bewertungsschaltung 14 wird die Vorgabe der adaptiven Steuerung, d.h. das über die Signalleitung 12 ankommende Stellsignal oder Schaltbefehl verglichen mit einem Eingriffssignal, das von dem Fahrer manuell über eine Bedienungseinrichtung 15 eingegeben wird. Im Falle einer Abweichung zwischen beiden Signalen wird eine Information über diese Abweichung in Form eines Eingriffbewertungssignals EBS an eine Selektionsschaltung 16 und an eine Parametrierungsschaltung 17 übermittelt und in diesen ausgewertet.

Durch die Auswertung wird festgestellt, welche der Schaltungen 3, 4, 8, 9 und 10 die festgestellte Abweichung verursacht. Die vorstehend aufgeführten Einzelschaltungen oder Schaltungsteile der Steuerung 1 sind alle durch bidirektionale Datenleitungen 18 miteinander verbunden. Dadurch kann in alle die Gangauswahl oder Übersetzungswahl bestimmenden Schaltungsteile 3, 4, 8, 9 und 10 eingegriffen werden, und zwar derart, daß zukünftige Schaltentscheidungen möglichst konform mit dem Fahrerwunsch getroffen werden, d.h., daß danach keine manuellen Eingriffe mehr erfolgen müssen, oder, wenn sie erfolgen, daß sie möglichst mit den Entscheidungen der Steuerung 1 übereinstimmen. Die Bewertungsschaltung 14 ist über eine einfach gerichtete Signalleitung 20 mit den Schaltungen 16 und 17 verbunden.

Durch die Selektionsschaltung 16 werden bestimmte Teilfunktionen der Steuerung 1 vollständig aktiviert oder abgeschaltet. Wird z.B. durch das Klassifikationssystem 4 eine "Bergfahrt" erkannt, selektiert die Strategieauswahl 8 ein für die Bergfahrt geeignetes Übersetzungswahlmuster aus dem Speicher 9. Greift der Fahrer ein, um beispielsweise eine Hochschaltung auszulösen, kann durch die Selektionsschaltung 16 das Aktivieren des Bergprogramms und die damit veränderte Auslösung von Hochschaltungen bei höheren Fahrzeuggeschwindigkeiten oder Motordrehzahlen vermieden werden.

Ein anderes Beispiel ist das Unterdrücken von Hochschaltungen bei Kurvenfahrt, das durch den Fahrmanöverklassifikator des Klassifikationssystems 4, durch die Strategieauswahl 8 und durch eine dynamische Korrektur in der Korrekturschaltung 10 bewirkt wird. Wünscht der Fahrer ein Festhalten des niedrigeren Ganges bei Kurvenfahrt nicht und teilt es durch einen manuellen Schaltbefehl über die Bedienungseinrichtung 15 mit, so werden durch die Selektionsschaltung 16 die Schaltungen 4, 8 und 10 dergestalt beeinflußt, daß die Schaltpunkts- oder Übersetzungswahladaption bei der Kurvenfahrt entfällt.

Durch die Parametrierungsschaltung 17 werden einige wichtige Parameter von Teilfunktionen, die in der Steuerung 1 abgelegt sind, verändert, ohne sie aber ganz außer Funktion zu setzen. Es handelt sich dabei um folgende Funktionen im einzelnen:
1) In der Schaltung 6 z.B. in Form von Schaltkennlinien ablegte Übersetzungswahlmuster werden verschoben;
2) in der Schaltung 8 abgelegte Auswahlparameter werden verändert, z.B. um einen "sportlichen" Fahrmodus seltener zu aktivieren;
3) das Klassifikationssystem 4 wird geändert: Ist dieses Klassifikationssystem als Fuzzy-System realisiert (wie in EP-A 0 638 742 beschrieben), so können vorgegebene Regeln "empfindlicher" oder "unempfindlicher" kalibriert werden. Eine Regel dieses Systems lautet:
   if ddk_mittel is high then Fahrer = sporty
   Diese Regel bewirkt, daß, wenn das Fahrpedal sehr oft betätigt wird, der Fahrer als "sportlich" eingestuft wird. Trifft diese Regel zu 100% zu, so wird die Strategieauswahl 8 ein fahrleistungsoptimiertes Übersetzungswahlmuster aus dem Speicher 9 selektieren, das zu höheren Motordrehzahlen führt. Ist der Fahrer damit nicht einverstanden, wird er mehrfach in Folge Hochschaltungen anfordern. Die Parametrierungsschaltung 17 setzt dies in eine Deaktivierung der vorstehend genannten Regel um und erzielt damit eine höhere Übereinstimmung des Schaltverhaltens mit dem Fahrerwunsch. Außerdem ist es möglich, eine andere Zugehörigkeitsfunktion "very high" zuzuordnen, um den Fahrer nicht mehr bei dem gegenwärtigen Verhalten als "sportlich" zu klassifizieren;
4) Die Aufbereitung der Eingangssignale in der Signalaufbereitungsschaltung 3 kann außerdem so beeinflußt werden, daß eine Verschiebung in Richtung "unempfindlich" vorgenommen wird, z.B. indem ein kleinerer Umrechnungsfaktor oder Verstärkungsfaktor in der Schaltung 3 verwendet und damit eine geändertes Schaltverhalten erreicht wird.

Entscheidend ist, daß die Eingriff-Bewertungsschaltung 14 auf der Leitung 20 eine signifikante Information zur Verfügung stellt, um die einzelnen Parameter der Getriebesteuerung entsprechend zu verstellen und in den Schaltungsteilen 16 und 17 eine Korrelation der Abweichungsursache vornehmen zu können. Dabei ist sowohl eine sofortige Information über den Fahrerwunsch nötig, um Kurzzeitfunktionen wie "Gangfesthalten bei Kurvenfahrt" zu verändern, als auch eine mittelfristige und langfristige Information über Abweichungen vom Fahrerwunsch, um Änderungen von Funktionen umzusetzen, die in entsprechend dauernden Perioden aktiv sind.

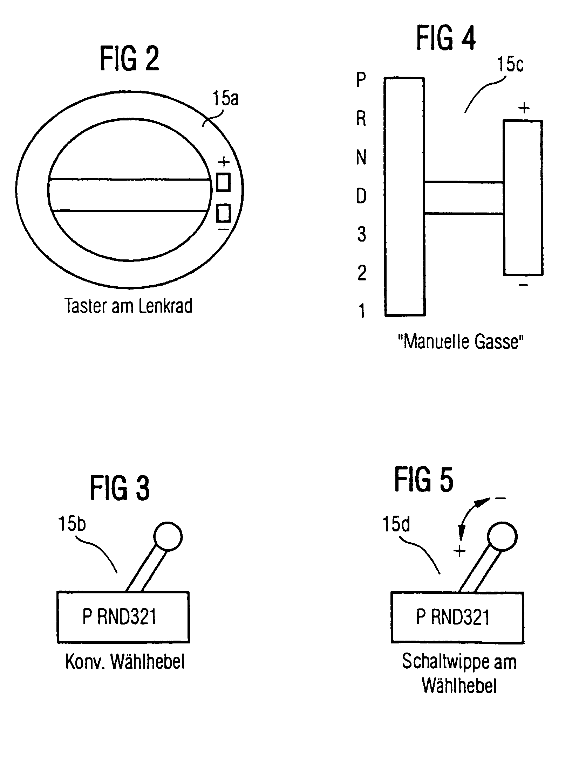

Aus den Figuren 2 bis 5 sind verschiedene Ausführungsbeispiele der Bedienungseinrichtung 15 ersichtlich:
- Mit einem Taster 15a am Lenkrad kann der Fahrer Eingriffssignale "+" zum Hochschalten und "-" zum Rückschalten eingeben (Figur 2).
- Mit einem konventionellen Schalthebel 15b kann der Fahrer über die üblichen Stellungen (z.B. 4-3-2) den gewünschten Gang vorgeben (Figur 3).
- Über eine "manuelle Gasse", die die Positionen P, R, N, D, 3, 2, 1 aufweist und mit einem Wählhebel für "+" und "-" kombiniert ist, kann der Fahrer ebenfalls den gewünschten Gang vorgeben (Figur 4).
- Eine weitere Möglichkeit zum Vorgeben des gewünschten Ganges ist ein Schaltwippe am Wählhebel mit den Stellungen "+" und "-" (Figur 5).

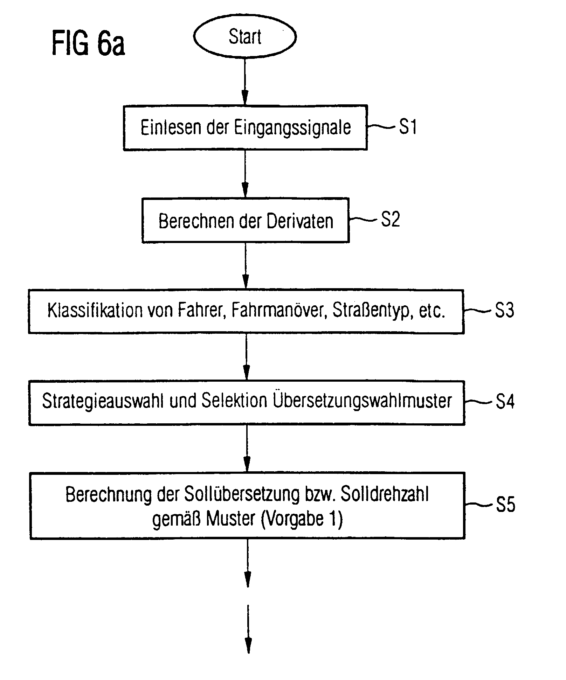

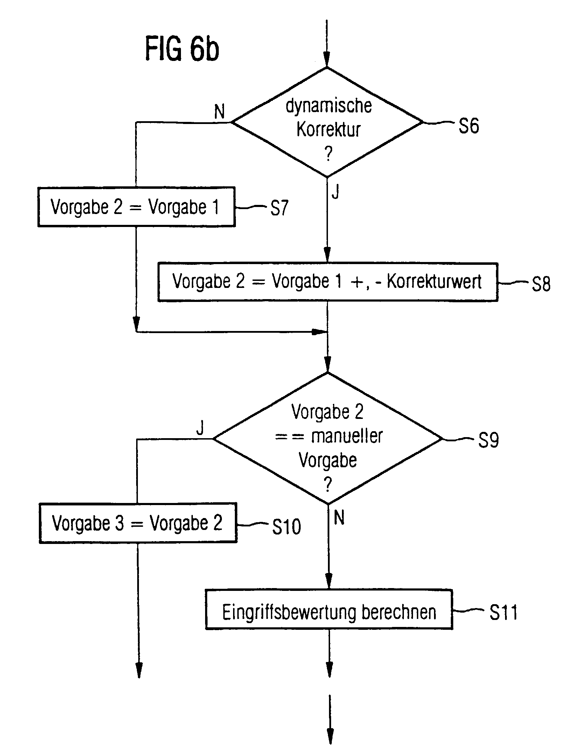

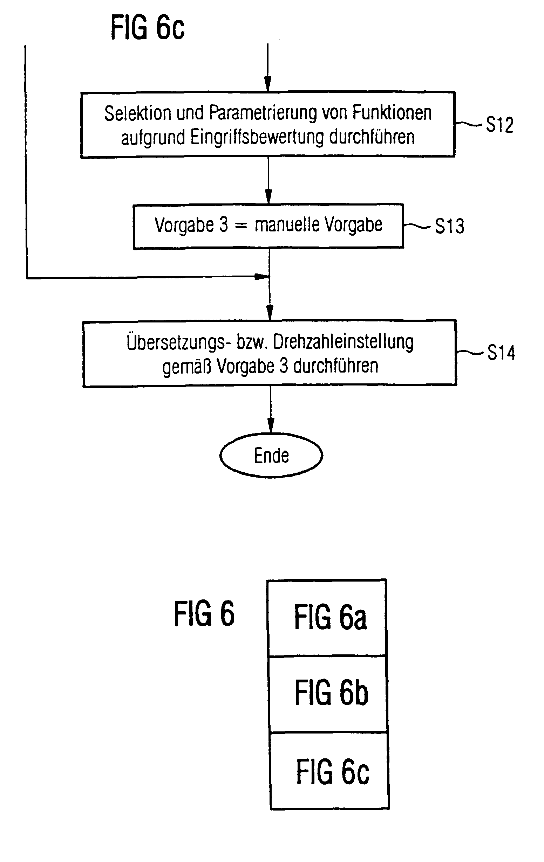

Anhand der aus den Einzelfiguren 6.a, 6.b und 6.c zusammenzusetzenden Figur 6 wird nun ein in der Steuerung 1 abgearbeitetes Programm in Form eines Ablauf- oder Strukturdiagramms erläutert.

Nach dem Start des Programms (Figur 6.a) erfolgt in einem Schritt S1 das Einlesen von Eingangssignalen über die Signalleitung 1. In einem Schritt S2 erfolgt in der Signalaufbereitung 3 das Berechnen von Derivaten aus den Eingangssignalen. In einem Schritt S3 erfolgt in dem Klassifikationssystem 4 eine Klassifikation des Fahrers und ggf. der Fahrmanöver, des Straßentyps usw. In einem Schritt S4 erfolgt in der Schaltung 8 eine Strategieauswahl und eine Selektion von Übersetzungswahlmuster aus dem Speicher 9. In einem Schritt S5 wird die Sollübersetzung oder Solldrehzahl gemäß dem gewählten Übersetzungswahlmuster berechnet oder festgelegt. Diese Sollübersetzung oder -Drehzahl wird als Vorgabe 1 bezeichnet.

In einem Schritt S6 (Figur 6.b) wird abgefragt, ob in der Korrekturschaltung eine dynamische Korrektur durchgeführt werden soll. Falls nein, wird in einem Schritt S7 einer Vorgabe 2 der Wert Vorgabe 1 zugewiesen und zu einem Schritt S9 gesprungen. Falls ja, wird in einem Schritt S8 der Vorgabe 2 der Wert zugewiesen Vorgabe 1 plus/minus einen Korrekturwert.

In dem Schritt S9 wird abgefragt, ob die Vorgabe 2 mit der manuellen Vor- oder Eingabe durch den Fahrer identisch ist. Wenn ja, wird in einem Schritt S10 einer Vorgabe 3 der Wert Vorgabe 2 zugewiesen und es erfolgt ein Sprung zu einem Schritt S14. Wenn nein, wird in einem Schritt S11 durch die Bewertungsschaltung 14 eine Eingriffsbewertung berechnet.

Anschließend erfolgt in einem Schritt S12 (Figur 6.c) durch die Schaltungsteile 16 und 17 eine Selektion und Parametrierung von Funktionen aufgrund der Eingriffsbewertung. In einem Schritt S13 wird einer Vorgabe 3 der Wert der manuellen Vorgabe durch den Fahrer zugewiesen. Schließlich wird in dem Schritt S14 durch die Übersetzungseinstellungsschaltung 13 eine Übersetzung- oder Drehzahleinstellung gemäß der Vorgabe 3 durchgeführt. Ein geändertes Stellsignal STS wird dann an das Getriebe 19 übermittelt. Damit ist der Programmdurchlauf an seinem Ende angelangt.

## Patentansprüche

1. Steuerung (1) für ein automatisches Getriebe (19) in einem mit einem Motor versehenen Kraftfahrzeug, die aufweist
- ein Klassifikationssystem (4), durch das der Fahrstil, das jeweilige Fahrmanöver oder der Straßentyp abhängig von Eingangssignalen, die entweder unmittelbar von Sensoren oder anderen Steuergeräten im Fahrzeug geliefert werden oder daraus in einer Signalaufbereitungsschaltung (3) abgeleitet wurden, klassifiziert werden,
- eine Strategieauswahlschaltung (8), durch die auf Basis der Klassifizierung ein Übersetzungswahlmuster aus einem Speicher (9) ausgewählt wird, wobei der Speicher (9), abhängig vom gewählten Übersetzungswahlmuster ein Stellsignal ausgibt,
- eine Bewertungsschaltung (14), durch die das Stellsignal mit einem vom Fahrer manuell eingegebenen Eingriffssignal verglichen wird und im Falle einer Abweichung
-- ein geändertes Stellsignal ausgegeben wird und
-- ein Eingriffsbewertungssignal (EBS) erzeugt wird, und
- eine Parametrierungsschaltung (17) und/oder eine Selektionsschaltung (16), durch die das Eingriffsbewertungssignal (EBS) ausgewertet und dadurch festgestellt wird, in welchem Schaltungsteil (3, 4, 8 oder 9) der Steuerung (1) die Ursache der Abweichung von dem Fahrerwunsch liegt und durch die in den als Ursache der Abweichung erkannten Schaltungsteilen (3, 4, 8 oder 9) Teilfunktionen selektiert und/oder parametriert werden.

2. Steuerung nach Anspruch 1, dadurch gekennzeichnet, daß sie eine Korrekturschaltung (10) aufweist, durch die das Stellsignal temporär korrigiert werden kann und die durch Auswerten des Eingriffsbewertungssignals (EBS) ebenfalls als Ursache der Abweichung von dem Fahrerwunsch erkannt werden kann.

3. Steuerung nach Anspruch 1 oder 2, dadurch gekennzeichnet, daß durch die Selektionsschaltung (16) Teilfunktionen der Steuerung (1) aktiviert oder abgeschaltet werden.

4. Steuerung nach Anspruch 1 oder 2, dadurch gekennzeichnet, daß durch die Parametrierungsschaltung (17) Parameter von Teilfunktionen der Steuerung (1) verändert werden.

5. Steuerung nach einem der vorhergehenden Ansprüche, dadurch gekennzeichnet, daß die Parametrierungsschaltung (17) und/oder die Selektionsschaltung (16) über bidirektionale Datenleitungen (18) mit der Signalaufbereitungsschaltung (3), der Klassifikationsschaltung (4), der Strategieauswahlschaltung (8), dem Speicher (9) und der Korrekturschaltung (10) verbunden sind.

6. Steuerung nach einem der vorhergehenden Ansprüche, dadurch gekennzeichnet, daß durch das Eingriffssignal sowohl kurzzeitig Stellsignale der Steuerung (1) als auch mittel- und langfristig Funktionen der Steuerung (1) beeinflußt werden.

7. Steuerung nach einem der vorhergehenden Ansprüche, dadurch gekennzeichnet, daß aufgrund des von dem Fahrer erzeugten Eingriffssignals in der Steuerung (1) abzuarbeitende Fuzzy-Regeln geändert werden.

## Claims

1. Controller (1) for an automatic gearbox (19) in a motor vehicle fitted with an engine, which has
- a classification system (4) which is used to classify the driving style, the driving manoeuvre in question or the road type, depending on input signals which are supplied either directly by sensors or other control units in the vehicle or have been derived from these in a signal conditioning circuit (3),
- a strategy selection circuit (8) which is used to select a gear-ratio selection pattern from a memory (9) on the basis of the classification, where the memory (9) outputs an actuating signal depending on the chosen gear-ratio selection pattern,
- a weighting circuit 14 which is used to compare the actuating signal with an intervention signal entered manually by the driver and, in the event of a deviation
-- to output a modified actuating signal and
-- to generate an intervention weighting signal (EBS),
and
- a parameterisation circuit (17) and/or a selection circuit (16) which are used to evaluate the intervention weighting signal (EBS) and thereby determine in which circuit element (3, 4, 8 or 9) of the controller (1) the reason for the deviation from the driver's requirement lies, and which are used to select and/or parameterise subfunctions in the circuit elements (3, 4, 8 or 9) recognised as being the cause of the deviation.

2. Controller in accordance with Claim 1, characterised in that it has a correction circuit (10) which can be used to effect a temporary correction of the actuating signal, and which through evaluation of the intervention weighting signal (EBS) can similarly be recognised as being the cause of the deviation from the driver's requirement.

3. Controller in accordance with Claim 1 or 2, characterised in that subfunctions of the controller (1) are activated or disabled by the selection circuit (16).

4. Controller in accordance with Claim 1 or 2, characterised in that parameters for subfunctions of the controller (1) are modified by the parameterisation circuit (17).

5. Controller in accordance with one of the above claims, characterised in that the parameterisation circuit (17) andlor the selection circuit (16) are connected via bidirectional data lines (18) to the signal conditioning circuit (3), the classification circuit (4), the strategy selection circuit (8), the memory (9) and the correction circuit (10).

6. Controller in accordance with one of the above claims, characterised in that the intervention signal has both a short-term influence on actuating signals for the controller (1) and a medium- and long-term influence on the functions of the controller (1).

7. Controller in accordance with one of the above claims, characterised in that fuzzy rules which are to be processed in the controller (1) are modified as a result of the intervention signal generated by the driver.

## Revendications

1. Commande (1) de boîte de vitesses automatique (19) dans un véhicule automobile à moteur, comportant
- un système de classification (4) par lequel le style de conduite, chaque manoeuvre de conduite, ou le type de route, sont classés en fonction de signaux d'entrée qui sont fournis directement par des capteurs ou par d'autres appareils de commandes placés dans le véhicule automobile, ou qui en ont été dérivés dans un circuit de traitement de signal (3),
- un circuit de choix de stratégie (8), par lequel est choisi, sur la base de la classification, un modèle de sélection du rapport de transmission à partir d'une mémoire (9), cette mémoire (9) fournissant alors un signal de réglage en fonction du modèle choisi de sélection du rapport de transmission,
- un circuit d'analyse (14) par lequel le signal de réglage est comparé à un signal d'intervention donné manuellement par le conducteur, et, dans le cas d'une divergence,
- un signal de réglage modifié est émis, et
- un signal d'analyse de l'intervention (EBS) est produit, et
- un circuit de paramétrage (17) et/ou un circuit de sélection (16), par lequel ou lesquels le signal d'analyse de l'intervention (EBS) est analysé en déterminant par ce moyen, dans quelle partie de circuit (3, 4, 8, ou 9) de la commande (1) se trouve la cause de la divergence avec le souhait du conducteur, et par lequel ou lesquels, dans les parties (3, 4, 8, ou 9) du circuit reconnues comme la cause de la divergence, des fonctions partielles sont sélectionnées et/ou paramétrées.

2. Commande suivant la revendication 1, caractérisée en ce qu'elle présente un circuit de correction (10) par lequel le signal de réglage peut être corrigé temporairement et par lequel, l'analyse du signal d'analyse de l'intervention (EBS), peut également être reconnu comme cause de la divergence avec le souhait du conducteur.

3. Commande suivant la revendication 1 ou la revendication 2, caractérisée en ce que des fonctions partielles de la commande (1) peuvent être activées ou désactivées par le circuit de sélection (16).

4. Commande suivant la revendication 1 ou la revendication 2, caractérisée en ce que des paramètres de fonctions partielles de la commande (1) peuvent être modifiés par le circuit de paramétrage (17).

5. Commande suivant l'une des revendications précédentes, caractérisée en ce que le circuit de paramétrage (17) et/ou le circuit de sélection (16) sont reliés, par des conducteurs bidirectionnels de données (18), au circuit de traitement de signal (3), au circuit de classification (4), au circuit de choix de stratégie (8), à la mémoire (9) et au circuit de correction (10).

6. Commande suivant l'une des revendications précédentes, caractérisée en ce qu'aussi bien des signaux à court terme de la commande (1) que des fonctions à moyen et à long terme de la commande (1) sont influencés par le signal d'intervention.

7. Commande suivant l'une des revendications précédentes, caractérisée en ce que des règles de logique floue, à traiter dans la commande (1), sont modifiées en se basant sur le signal d'intervention produit par le conducteur.
